# EUROPEAN PATENT APPLICATION

(11) **EP 1 994 945 A1**
(43) Date of publication of application: **26.11.2008**
(21) Application number: 08156267.0
(22) Date of filing: 15.05.2008
(51) Int. Cl.: A61K 47/48, C08B 11/12, C08B 31/10, C08B 37/00, C08B 37/04, C08B 37/08

(54) **"Amido-phosphonate or amido-bisphosphonate derivatives of carboxylated polysaccharides, preparation and biomedical uses thereof"**

(30) Priority: 16.05.2007 EP 07425286
(71) Applicant: Biosuma S.r.l., 53100 Siena (IT)
(72) Inventor: Barbucci, Rolando, 53100, SIENA (IT)
(74) Representative: Minoja, Fabrizio

(57) **Abstract**

Disclosed are carboxylated polysaccharides amido-phosphonated or amido-bis-phosphonated derivatives obtained by reaction of polysaccharides with nitrogen containing bisphosphonates or aminoalkyl phosphonic acid or imino(dialkyl phosphonic acid), and their use in the preparation of pharmaceutical formulations.

## Description

The present invention relates to amido-phosphonate or amido-bisphosphonate derivatives of carboxylated polysaccharides, to their preparation and biomedical uses.

### Background to the invention

Natural and semisynthetic polymers are widely used in various fields in view of their chemico-physical, technological and biological properties, and the low cost of the raw materials.

The fields in which these compounds are mainly employed are the food industry, in which they are used as thickeners, viscosity-controlling agents, buffers, etc., and the pharmaceutical industry, in which they are used to coat tablets and capsules and as topical gels with controlled release of the active constituents. Their use in the biomedical field is particularly interesting because these compounds are biocompatible and in some cases biodegradable.

The development of biomaterials for tissue engineering applications has recently been focused on the design of biomimetic materials that are capable of eliciting specific cellular responses and directing new tissue formation mediated by biomolecular recognition. Bone formation is the results of sequential events that begins with the recruitment and proliferation of osteoprogenitor cells from surrounding tissues, followed by osteoblastic differentiation, matrix formation, and mineralization. Many efforts have been made to find methods for improving the integration of polymeric biomaterials with natural hard tissues for orthopaedic applications such as bone replacement, repair and fixation. The integration of biomimetic scaffolds into bone tissue take place at the material-tissue interface and is often determined by initial cell and substrate interaction. The main requirements for a biomaterial to function properly in an osseous site include a good biocompatibility and bioactivity (favouring of bone apposition), adequate mechanical properties, and the ability to assure skeletal function. These qualities are usually attributed to two key properties: ability to induce formation of an apatite layer on material surfaces in physiological conditions and ability to promote bone cells anchorage, attachment, spreading, growth and differentiation.

In order to obtain polymeric biomaterials with osteogenic activity, various examples are reported concerning the grafting of phosphate groups to polymeric chains, as it is well known that phosphorous can act as nucleating centre since anions attract and coordinate the Ca²⁺ cations.

However, the phosphonates are examples of naturally occurring molecules bearing phosphorous atoms, that recently are increasingly used as isosteric mimics of phosphates in the design of analogues of enzyme substrate or cofactor. The phosphonates have phosphorous atoms at lower oxidized state than phosphates, as they contain one carbon directly bonded to phosphorous (P-C), and they offer the advantage of a much greater stability to chemical and enzymatic hydrolysis, thermal decomposition and photolysis.

Bisphosphonates are powerful bone resorption inhibitors widely used for the treatment and prevention of osteoporosis and other disorders characterised by increased bone remodelling. Among all the available bisphosphonates, the nitrogen containing bisphosphonates, like pamidronate, alendronate, neridronate, etc. are the most used in the osteoporosis disease as they have a high ability to inhibit the bone resorption.

Macromolecules of interest are carboxylated polysaccharides of both natural origin such as alginic acid (AA) and hyaluronic acid (Hyal), and semisynthetic origin such as carboxymethylcellulose (CMC), carboxymethyl-starch (CMS), amido carboxymethylcellulose (CMCA) and amido alginic acid (AAA).

The properties of the latter two polymers are described in EP 1614696, disclosing the amidation reaction of CMC, AA and CMS and the cross-linking of the corresponding amido polymers.

In order to introduce phosphonic groups in the carboxylated polysaccharides, the amino-bisphosphonates, such as alendronic, pamidronic acid, alendronic acid, neridronic acid and analogues thereof, may be used.

Moreover, the invention concerns the derivatization of carboxylated polysaccharides by using two classes of phosphonating agents alternative to the commonly used bisphosphonates.

The first class comprises amino alkyl phosphonic acids with linear or branched alkyl chain of different length, optionally substituted, such as 2-aminoethyl phosphonic acid, allowing the introduction of only one phosphonic group per each carboxyl group involved in the reaction.

The second class is iminodi(alkyl phosphonic acid) with linear or branched alkyl chain of different length, optionally substituted, such as iminodi(methylphosphonic acid), allowing the introduction of two phosphonic groups for every carboxyl group involved in the reaction.

These two classes of phosphonating agents are commercially available in a large range of compounds with alkyl chains of different length allowing the preparation of a series of different amido-bisphosphonated polysaccharides, with a lower cost and a better yield in terms of modification degree than the used traditional bisphosphonates.

The derivatives of the invention can be exploited, especially in the field of tissue engineering, as cell scaffolds for tissue regeneration. Moreover, the low cost of the raw materials and their derivatives enables their widespread use in the food, pharmaceutical, medical and cosmetic fields.

### Description of the invention

The object of the invention relates to amido-phosphonated or amido-bisphosphonated derivatives of carboxylated polysaccharides, particularly carboxymethylcellulose, alginic acid, hyaluronic acid, carboxymethyl-starch, amido carboxymethylcellulose and amido alginic acid.

Carboxylated polysaccharides can be derivatized starting from the polysaccharide sodium salt, and using nitrogen containing bisphosphonates such as alendronic, pamidronic, neridronic acids and similar compounds or aminoalkyl phosphonic acids such as 2-aminoethyl phosphonic acid or iminodi(alkyl phosphonic acid) such as iminodi(methylphosphonic acid) as the amido-phosphonating agents.

The derivatization reaction can be conducted in an aqueous medium, at a temperature between 10 and 70°C, preferably at room temperature, in the presence of the polysaccharides, pre-activated at the carboxyl group with reagents such as N-hydroxysuccinimide (NHS) or 1-ethyl-3-(3-dimethy-aminopropyl)-carbodiimide (EDC) or the like.

The number of phosphonate groups introduced on the polysaccharide chain depend on the kind of phosphonating agent used. When using the aminoalkyl phosphonic acid, only one phosphonic group is introduced per each activated carboxyl group. When using iminodi(alkylphosphonic acid) or nitrogen containing bisphosphonic acids, two phosphonic groups are introduced per each activated carboxyl group.

The factors determining the derivatization degree depend on the amount of the amido-phosphonating or bisphosphonating agent.

The amido-phosphonated or amido-bis-phosphonated derivatives may then be crosslinked by inter- or intra-molecular reaction between the unreacted carboxyl groups, suitably activated.

The amido-phosphonation or bisphosphonation was confirmed by ³¹P-NMR studies and IR spectroscopy. The IR analysis shows characteristic bands of the modified polymer at around 1550 and 1650 cm⁻¹, confirming the presence of the amido bond; said bands are respectively attributed to the amido C=O and NH stretching. The presence of the phosphonate or bis-phosphonate groups is confirmed by a band at around 1430 cm⁻¹ (stretching of P-CH₂-R), a band at around 1300-1200 cm⁻¹ (stretching of P=O) and two bands at around 900 and 800 cm⁻¹ (respectively to P-O-R and P-C stretching).

Viscosimetry analysis indicates that the aqueous solutions of amido-phosphonate or bis-phosphonate derivatives have viscosity values lower than the native polysaccharide, in the same conditions of temperature and concentration.

The derivatization degree was evaluated by potentiometric titration and resulted to be dependent on the amount and the kind of phosphonating or bisphosphonating agent.

The obtained derivatives may be used in the field of bone tissue regeneration as biomimetic materials promoting osteointegration and osteoinduction.

### Example 1

Carboxymethylcellulose (CMC) reacted with 2-Aminoethyl-phosphonic acid

Sodium CMC (200 kDa) was slowly dissolved in water (1.5% w/v) under magnetic stirring, and NHS (2:1 ratio to the polymer), 2-Aminoethyl-phosphonic acid (2:1 ratio to the polymer) and EDC (4:1 ratio to the polymer) were consecutively added to the solution.

The solution was stirred at room temperature over night, and then the polymer was ultrafiltrated with double distilled water until no more residues were observed in the waste waters (IR monitoring)

### Example 2

### Carboxymethylcellulose (CMC) reacted with Iminodi(methylphosphonic acid)

Sodium CMC (200 kDa) was slowly dissolved in water (2% w/v) under magnetic stirring, and Iminodi(methylphosphonic acid) (2:1 ratio to the polymer) was added. Then TEA was added till pH=4.7 and then EDC (4:1 ratio to the polymer). The solution was stirred 3 hours at room temperature, and then the polymer was ultrafiltrated with double distilled water until no more residues were observed in the waste waters (IR monitoring).

### Example 3

Carboxymethylcellulose (CMC) reacted with alendronic acid.

Sodium CMC was slowly dissolved in water (1% w/v) under magnetic stirring, and NHS was added to the solution (1:1 ratio to the polymer). The pH was adjusted at around 4.7, then EDC was added to the mixture and the required amount of alendronate was added. The mixture was stirred at room temperature for about 2h and then the polymer was ultrafiltrated with double distilled water until no more residues were observed in the waste waters (IR monitoring).

## Claims

1. Amido-phosphonated or amido-bisphosphonated derivatives of carboxylated polysaccharides, optionally crosslinked.

2. Derivatives as claimed in claim 1, wherein the carboxylated polysaccharides are selected from carboxymethylcellulose, alginic acid, carboxymethyl-starch, amido carboxymethylcellulose, amido alginic acid and hyaluronic acid.

3. Derivatives as claimed in claim 1 or 2, obtainable by reaction of the polysaccharide sodium salt with aminoalkyl phosphonic acid, with linear or branched alkyl chain of different lengths, optionally substituted.

4. Derivatives as claimed in claim 1 or 2, obtainable by reaction of the polysaccharide sodium salt with imino(dialkyl phosphonic acid), with linear or branched alkyl chain of different length, optionally substituted.

5. Derivatives as claimed in claim 1 or 2, obtainable by reaction of the polysaccharide sodium salt with amino bisphosphonates.

6. Derivatives according to claim 5 wherein the amino-bisphosphonates are selected from alendronic, pamidronic, neridronic acids.

7. Derivatives as claimed in claim 1 or 2, obtainable by reaction of the polysaccharide activated at the carboxyl group with 1-ethyl-3-(3-dimethylaminopropyl)-carbodiimide and N-hydroxysuccinimide (NHS) and subsequent reaction with a phosphonating agent as claimed in claim 3, 4 and 5.

8. Derivatives as claimed in any one of claims 1-6, in crosslinked form.

9. Biomimetic materials promoting osteointegration and osteoinduction, comprising the derivatives of claims 1-8.

10. Use of the polysaccharides and hydrogels of claims 1-8 as a carrier for pharmaceutical formulations.
